# EUROPEAN PATENT APPLICATION

(11) **EP 4 145 399 A1**
(43) Date of publication of application: **08.03.2023**
(21) Application number: 21194963.1
(22) Date of filing: 06.09.2021
(51) Int. Cl.: G06V 10/50, G06V 10/75, G06V 20/56

(54) **METHOD AND DEVICE FOR PLAUSIBILISING EXTRACTED LANE PROPERTIES USING SENSOR DATA CAPTURED BY AT LEAST ONE SENSOR SYSTEM INSTALLED AT AN AUTOMATED VEHICLE**

(71) Applicant: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(57) **Abstract**

Provided is a method for plausibilising extracted lane properties using sensor data captured by at least one sensor system installed at an automated vehicle. The method comprises extracting first lane properties from the captured sensor data using an algorithm being based on artificial intelligence; extracting second lane properties from the captured sensor data using a deterministic algorithm; and performing a plausibility check by comparing the extracted first and second lane properties to each other to plausibilise the extracted first and second lane properties.

## Description

The present invention is directed to a method for plausibilising extracted lane properties using sensor data captured by at least one sensor system installed at an automated vehicle, a data processing device comprising means for carrying out the method at least partly, as well as a computer program product and/or computer-readable storage medium comprising instructions which, when executed by a computer, cause the computer to carry out the method at least partly.

In autonomous driving detection of objects, obstacles and driving lanes plays a pivotal role for a higher level of autonomy.

In US2016350603A1 a method for lane detection is disclosed, wherein the method includes generating an edge image including inbound edges of lane-markings corresponding to a road image. Based on an adaptive thresholding of intensity of lane-markings from image strips selected from the image, a plurality of lane masks are extracted. A plurality of valid lane masks are selected from the plurality of lane masks based on a structure and intensity information of the plurality of valid lane masks in the image strips. An overlap between the inbound edges and the valid lane masks is determined to identify a plurality of edge segments of the pair of inbound edges belonging to the lane-markings. A set of valid edge segments of the pair of inbound edges is obtained based on the curvature information of the edge segments.

US 2021/094566 A1 describes a method for detecting a lane for a transverse guidance of a vehicle. The transverse guidance of the vehicle is based on a roadway model. The method has the steps of ascertaining one or more features which are suitable for influencing the detection of the lane; detecting a lane on the basis of a sensor system of the vehicle; and ascertaining the roadway model on the basis of the detected lane and the ascertained one or more features. The method optionally has the steps of additionally receiving navigation data and transversely guiding the vehicle on the basis of the ascertained roadway model.

In this context, a detection of lane properties, such as a color of a lane (marking), especially with ASIL integrity, is very important, e.g., considering a vehicle reaction in case the lane color changes from white lanes to yellow lanes (at least in Europe) indicating a construction/obstruction on the road. Such kind of scenarios are important to identify and react to automated without a need for human intervention.

Here ASIL is the Automotive Safety Integrity Level which is a risk classification scheme defined by the ISO 26262 - Functional Safety for Road Vehicles standard. This is an adaptation of the Safety Integrity Level (SIL) used in IEC 61508 for the automotive industry. This classification helps defining the safety requirements necessary to be in line with the ISO 26262 standard. The ASIL is established by performing a risk analysis of a potential hazard by looking at the Severity, Exposure and Controllability of the vehicle operating scenario. The safety goal for that hazard in turn carries the ASIL requirements.

There are four ASILs identified by the standard: ASIL A, ASIL B, ASIL C, ASIL D. ASIL D dictates the highest integrity requirements on the product and ASIL A the lowest. Hazards that are identified as QM do not dictate any safety requirements.

However, known methods for determining properties of lane often do not provide a certain safety integrity level needed in autonomous driving.

In light of this prior art, the object of the present invention is to provide a device and/or a method being suitable for overcoming at least the above-mentioned disadvantages of the prior art, respectively.

The object is solved by the features of the independent claims. The dependent claims have preferred further embodiments of the invention as their subject matter.

More specifically, the object is solved by a method for plausibilising extracted lane properties using sensor data captured by at least one sensor system installed at an automated vehicle.

The method is characterized by comprising a step of extracting first lane properties from the captured sensor data using an algorithm being based on artificial intelligence.

The method is further characterized by comprising a step of extracting second lane properties from the captured sensor data using a deterministic algorithm.

The method is even further characterized by comprising a step of performing a plausibility check by comparing the extracted first and second lane properties to each other to plausibilise the extracted first and second lane properties.

In other words, a validator may be provided where the first lane properties extracted by the artificial intelligence/machine learning algorithm is crosschecked with the second lane properties extracted by the deterministic algorithm to add a final layer of safety and increased confidence regarding the lane properties, i.e. fulfilling a certain integrity level (e.g., ASIL A to ASIL D).

This allows for a double check, i.e. plausibility check, of the first lane properties extracted with the artificial intelligence algorithm and the second lane properties extracted with the deterministic algorithm. Thereby a safety integrity, e.g. ASIL A - D, with respect to the extracted lane properties can be ensured. The extracted lane properties, i.e., the first and/or the second lane properties, may be used in an optional further step of the method including controlling the automated vehicle based on the extracted lane properties in case the extracted first and second lane properties have a predefined degree of similarity or are the same. Otherwise, an error flag may be raised.

The lane may also be called lane or road marking or road surface marking. The lane may be a colored marking on the surface of traffic areas of road traffic. The lane may be a solid lane and/or a dashed lane, wherein the lane may be a single or a double lane. Colors of the lane may include inter alia white and yellow.

The algorithm which is based on artificial intelligence may be trained using machine learning, preferably supervised learning.

The sensor system may comprise a camera system with at least one camera, preferably multiple cameras, being installed at the automated vehicle such that the captured sensor data corresponds to an environment around the automated vehicle.

In case the camera system is provided, the sensor data may be called camera data or may at least comprise camera data. The camera system may comprise four cameras optionally being part of a surround view camera system.

The step of extracting first lane properties using the algorithm being based on artificial intelligence may include calculating multiple histograms. The multiple histograms may include at least one histogram for each one of the multiple cameras. Additionally, the step of extracting first lane properties using the algorithm being based on artificial intelligence may include extracting the first lane properties from each one of the calculated multiple histograms.

Each one of the histograms may be or include the statistical frequency of gray values or color values in an image, here in a frame, captured by one of the cameras. The histogram may allow the algorithm being based on artificial intelligence to extract the first lane properties using the calculated histograms.

In case of the above given example of four cameras included in the camera system, four histograms may be calculated, wherein one histogram is calculated based on the camera data extracted by one of the four cameras, respectively. For calculating the histogram the same algorithm (e.g., an algorithm based on artificial intelligence and/or a deterministic algorithm (i.e., an algorithm not based on artificial intelligence)) may be used for all or some of the cameras of the camera system or that different algorithms are used for each one of the cameras of the camera system.

Offline data may be used for calculating the multiple histograms. The offline data may comprise statistical data. The statistical data may comprise at least one frame of camera data previously captured by one of the multiple cameras with, optionally manually labelled, first lane properties.

Performing the plausibility check may further include comparing the calculated multiple histograms to each other to plausibilise the extracted first properties.

At least two of the multiple cameras of the camera system may comprise overlapping fields of view, e.g., a camera installed at the front of the vehicle and a camera installed at a right or left side of the vehicle may have overlapping filed views.

Performing the plausibility check may further include comparing the at least two calculated histograms of the at least two cameras in a region where the fields of view of the at least two of the multiple cameras overlap each other to plausibilise the extracted first lane properties.

The method may further include detecting the lane using the captured sensor data and extracting the first and/or the second lane properties from at least one, preferably multiple, more preferably three to five, data sample(s) being located at or in a vicinity of a center of the detected lane or the center of the automated vehicle The samples are not restricted to the center and could be taken anywhere along a line or spline running through the center of the detected lane or the center of the automated vehicle.

For marking the lane a bounding box, in case of multiple detected lane segments multiple bounding boxes, may be used to mark the detected lane. The bounding box(es) may be used to determine a center of the lane (segment). It is possible that the center of the lane (segment) is determined by determining a center of the respective bounding box. Determining the center of the bounding box may include calculating a spline running through the middle of the bounding box and parallel to a road where the lane is located and/or parallel to the automated vehicle position/trajectory. In case of a bounding box marking a lane segment, determining the center of the bounding box may include calculating a line being perpendicular to the calculated spline and having substantially a same distance to outer boundaries of the bounding box, the outer boundaries being also substantially perpendicular to the calculated spline.

In the vicinity of the center of the lane may mean, that the data sample is not interfering with an outer edge/boundary of the bounding box. The data sample may also be called image section or measuring area (for the first lane properties). That is, the lane properties may not be determined using the whole image/frame captured by one of the cameras, but using only certain parts of the captured data corresponding to the center and/or the vicinity of the center of the lane. The above described histograms may only be calculated for these sample/measuring areas.

Extracting the second lane properties from the captured sensor data using the deterministic algorithm may comprise taking a first data sample located at the center of the detected lane, and taking at least one second data sample located in the vicinity of the center of the detected lane such that the at least one second data sample at least partly overlaps with the first data sample. Extracting the second lane properties from the captured sensor data using the deterministic algorithm may further comprise extracting the second lane properties from the first and the at least one second data sample.

This allows for a double check, i.e. plausibility check, of the first lane properties extracted with the artificial intelligence algorithm.

Extracting the second lane properties from the captured sensor data using the deterministic algorithm may be done for multiple frames of captured sensor data and/or multiple segments of the lane.

Performing the plausibility check may further include comparing the second lane properties extracted from the multiple frames and/or multiple segments using the deterministic algorithm to each other to plausibilise the extracted second lane properties.

Extracting the second lane properties from the captured sensor data using the deterministic algorithm may be done for each one of the multiple cameras, respectively.

Performing the plausibility check may further include comparing the second lane properties extracted from the captured sensor data of each one of the multiple cameras to each other to plausibilise the extracted second lane properties.

That is, two further safety nets may be provided with respect to the second lane properties extracted from the captured sensor data using the deterministic algorithm, wherein as a first safety measure each camera may plausibilise itself using captured data from multiple frames and/or lane segments and as a second measure the cameras may plausibilise each other by comparing the extracted second lane properties to each other.

The first and/or the second lane properties may include a color, a contour, optionally including a size, a length and/or a width, coefficient of lane segments, start and end of lane segments, lane age, lane confidence, color confidence, lane mark type, lane range start, lateral and longitudinal distance, lane range end and availability of the lane. The first and the second lane properties may be, at least partly, the same.

The above given description may be summarized in a more concrete manner and other words as follows.

The invention provides a systematic approach to apply a hybrid methodology using machine learning (ML) with artificial intelligence (AI) and a deterministic approach to detect and determine lane properties.

The lane properties extracted using artificial intelligence may be called statistical AI lane properties (such as color, contour including size, length and width, coefficient of lane segments, start and end of lane segments, lane age, lane confidence, color confidence, lane mark type, lane range start, lateral and longitudinal distance, lane range end and availability of the lane).

An ML based approach may be used to determine where the data samples need to be taken for each lane segment center. Here, there is no limit to how many samples need to be taken.

The only thing which should be avoided is to not take a sample near the edge of the contour of a segment as defined by the edges of a bounding box.

Each camera of a surround view system may have its own histogram based on statistical data collected for this particular camera of this frame.

The statistical data could also use the previous information to generate higher confidence based on offline data, i.e. manually labelled lane properties (e.g., color) which could be used as a software library or as a look up table for each camera.

The AI approach could be extended to each camera of the surround view system, i.e., four different cameras with four different statistical histograms with respective lane properties.

Lane properties overlapping in at least two different cameras of the same frame (i.e., at same timestamps) could be used as a first set of plausibilisation to ensure that the detected lane properties are correct and seen by more than one camera.
The second layer of plausibilisation may come when each camera will plausibilise itself with the other three cameras (at the same timeframe) to detect same lane properties (using AI/ML).

The deterministic algorithm may include a deterministic sampling measurement approach that takes a fixed set of measurement samples of the given lane properties from each camera. Here the number of samples could vary from 3 to 5 focus areas for each lane segment, for example.

The first measurement sample should be taken from the center of the lane segment/bounding box. The other measurements could be taken either as small overlap from the first sample in longitudinal direction or across the length of the bounding box.

The deterministic algorithm may calculate lane properties for each camera with respect to multiple frames/lane segments.

The information from each camera could be plausiblized only from deterministic algorithm as third layer of lane information plausibilisation.

Finally, a validator which is taking input from both, the statistical AI lane properties and from the deterministic algorithm, does a final set of plausibilisation ensuring higher detection performance and safety integrity of the given lane properties, e.g., lane color.

Furthermore, a data processing device comprising means for carrying out the above described method at least partly is provided, wherein the description given above with respect to the method applies mutatis mutandis to the data processing device and vice versa.

The data processing device may be a control unit configured to control the automated vehicle. The data processing device may be connected to the sensor system.

It is possible that an automated vehicle comprising the data processing device is provided. The automated vehicle may be configured to take over a longitudinal and/or transverse guide of the automated vehicle at least partly and/or at least temporarily. The automated vehicle may comprise the sensor system.

Furthermore, a computer program product and/or a computer-readable storage medium comprising instructions which, when executed by a computer, cause the computer to carry out the above described method at least partly, is provided, wherein the description given above with respect to the method and the data processing device applies mutatis mutandis to the computer program product and the computer-readable storage medium and vice versa.

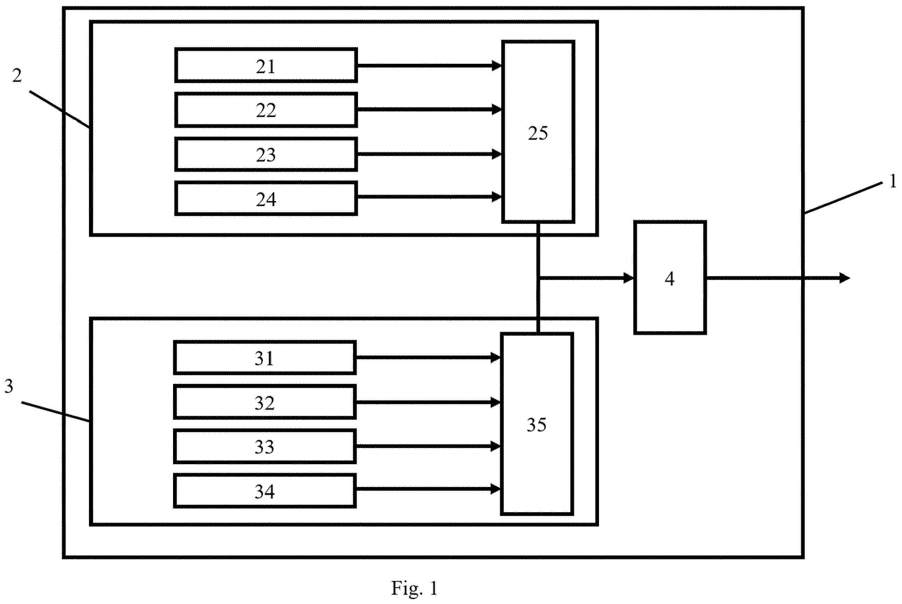

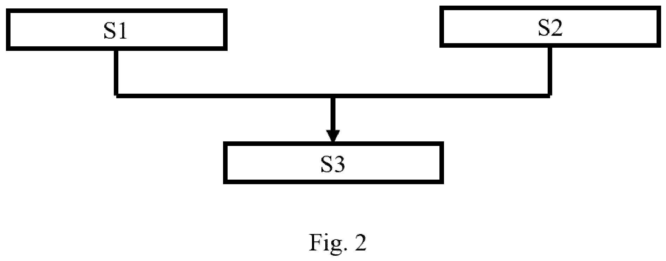

An embodiment is described with reference to figures 1 and 2 below.
- Fig. 1: shows schematically a data processing device configured to carry out a method for plausibilising extracted lane properties using sensor data captured by at least one sensor system installed at an automated vehicle, and
- Fig. 2: shows a flow diagram for the method for plausibilising the extracted lane properties using the sensor data captured by the at least one sensor system installed at the automated vehicle.

As can be gathered from figure 1, the data processing device 1 comprises a first feature extraction module 2, a second feature extraction module 3, and a validator 4.

The data processing device 1 is connected on an input side thereof to a (not shown) sensor system installed at an automated vehicle. The sensor system comprises four or more cameras being installed at the automated vehicle such that the captured sensor data, here camera data, corresponds to an environment around the automated vehicle. The camera system is configured to output the captured camera data to the data processing device 1.

The first feature extraction module 2 is configured to receive the captured camera data and to extract first lane properties from the captured camera data using an algorithm being based on artificial intelligence during a first step S1 of the method.

For extracting the first lane properties using the algorithm being based on artificial intelligence, the first feature extraction module 2 comprises four histogram calculating modules 21, 22, 23, 24. That is, for each one of the four cameras one histogram calculating module 21, 22, 23, 24 is provided.

Extracting the first lane properties using the algorithm being based on artificial intelligence comprises calculating four histograms, wherein each one of the four histogram calculating modules 21, 22, 23, 24 calculates one histogram based on camera data provided by the respective one of the four cameras connected to the respective one of the four histogram calculating modules 21, 22, 23, 24.

Here, each one of the four histogram calculating modules 21, 22, 23, 24 uses a different algorithm for extracting the histograms. Each one of the different algorithms is based on artificial intelligence, but the training data used for training the algorithm varies from camera to camera since each camera is installed at a different position of the automated vehicle (here one at the front, one at the back, one at the left and one at the right of the automated vehicle). However, it would also be possible that the same algorithm is used at some or all of the four histogram calculating modules 21, 22, 23, 24.

The algorithms calculating the histograms use as input data the camera data of the respective camera (as online data) and offline data. The offline data includes statistical data that comprises at least one frame of camera data previously captured by the respective one of the multiple cameras and/or (optionally manually) labelled frames (optionally also captured by the camera in advance).

In the present case, the four histograms are not calculated for the whole image, i.e., all of the camera data, captured by the respective camera but for an optionally predefined amount of data samples. These data samples correspond to regions located at a center of the lane. A position of the center of the lane may be given as input data to the algorithm and/or the algorithm, i.e., the method, may include (a step of) detecting the lane using the captured sensor data, determining a bounding box around the detected lane and determining a center of the bounding box which is taken as the center of the detected lane. The sizes of the samples, which may have a rectangular, circle or any other outer shape, are chosen so that none of the edges/boundaries of the bounding box cut the samples.

After calculating the four histograms as described above, each one of the four histogram calculating modules 21, 22, 23, 24 outputs its calculated histogram to a multi path first lane property detection module 25.

The multi path first lane properties detection module 25 is configured to determine/detect the first lane properties based on each one of the calculated multiple histograms together. That is, the multi path first lane properties detection module 25 comprises an algorithm being based on artificial intelligence, wherein this algorithm gets as input data all four histograms, and extracts and outputs first lane properties using information of all four histograms together (in difference to a deterministic algorithm configured to extract (the second) lane properties separately for each camera, as explained in detail below). In other words, the first lane properties are extracted using each one of the calculated multiple histograms.

To increase the safety integrity of the extracted lane properties, it is possible that the multi path first lane properties detection module 25 is configured to compare the calculated multiple histograms to each other to plausibilise the extracted first lane properties.

More specifically, in the present case at least two of the multiple cameras of the camera system comprise overlapping fields of view. Therefore, the multi path first lane properties detection module 25 is configured to compare the at least two calculated histograms of the at least two cameras in a region where the fields of view of the at least two of the multiple cameras overlap each other to plausibilise the calculated histograms and to (indirectly) plausibilise the extracted first lane properties.

After extraction and optionally plausibilisation as described above, the extracted first lane properties are output from the multi path first lane properties detection module 25 to the validator 4 at the end of the first step S1 of the method.

In the following, a second step of the method will be explained. The second feature extraction module 3 is configured to receive the captured camera data and to extract second lane properties from the captured camera data using a deterministic algorithm during the second step S2 of the method.

According to figure 2, the first and the second S1, S2 are performed/carried out simultaneously. However, it is also possible that the first step S1 is carried out before the second step S2 or vice versa.

For extracting the second lane properties using the deterministic algorithm, the second feature extraction module 3 comprises four second lane properties detection modules 31, 32, 33, 34. That is, for each one of the four cameras one second lane properties detection module 31, 32, 33, 34 is provided.

Extracting the second lane properties using the deterministic algorithm does not comprise calculating four histograms, but comprises (directly) detecting the second lane properties using a deterministic algorithm. The deterministic algorithm uses as input data the camera data of the respective camera. Each one of the four second lane properties detection modules 31, 32, 33, 34 detects the second lane properties based on camera data provided by the respective one of the four cameras connected to the respective one of the second lane properties detection module 31, 32, 33, 34. That is, the second lane properties are extracted from the captured sensor data using the deterministic algorithm for each one of the multiple cameras, respectively/separately.

Here, each one of the second lane properties detection modules 31, 32, 33, 34 uses a different algorithm for extracting the second lane properties. However, it would also be possible that the same algorithm is used at some or all of the four second lane properties detection modules 31, 32, 33, 34.

In the present case, the second lane properties are not extracted for the whole image, i.e., all of the camera data, captured by the respective camera but for an optionally predefined amount of data samples, e.g., three to five. These data samples correspond to regions located at a center of the lane and may be determined as explained above with respect to the first step and/or may be given as input data to the algorithm.

More specifically, extracting the second lane properties from the captured sensor data using the deterministic algorithm comprises taking a first data sample located at the center of the detected lane, and taking some, here two to four, second data samples located in the vicinity of the center of the detected lane such that the five data samples at least partly overlap with each other. The deterministic algorithm carried out the four second lane properties detection modules 31, 32, 33, 34, respectively, extracts the second lane properties from the five data samples. This may be done for multiple frames of captured sensor data and/or multiple segments of the lane.

Each one of the four second lane properties detection modules 31, 32, 33, 34 may be configured to compare the second lane properties extracted (using the deterministic algorithm) from the multiple frames, multiple segments and/or multiple samples to each other to plausibilise the extracted second lane properties.

After extracting the second lane properties and optionally performing the above described plausibility check with respect to the second lane properties, each one of the four second lane properties detection module 31, 32, 33, 34 outputs its detected second lane properties to a multi path second lane property detection module 35.

The multi path second lane properties detection module 35 is configured to determine/detect the second lane properties based on the input information, i.e., the second lane properties, received from the second lane properties detection modules 31, 32, 33, 34, respectively. More concretely, the multi path second lane properties detection module 35 compares the second lane properties extracted from the captured sensor data of each one of the multiple cameras, i.e., the information received from the four second lane properties detection modules 31, 32, 33, 34, to each other to plausibilise the extracted second lane properties and to output the plausibilized second lane properties to the validator 4.

The validator 4 is configured to receive the first lane properties extracted by the first feature extraction module 2 and the second lane properties extracted by the second feature extraction module 3 during a third step S3 of the method.

The validator 4 is configured to perform a plausibility check by comparing the extracted first and second lane properties to each other to plausibilise the extracted first and second lane properties during the third step S3 of the method.

The validator 4 is also configured to output the first and/or the second lane properties to the automated vehicle if the plausibility check is positive, i.e. a deviation of the first and the second lane properties is within a certain threshold, during the third step S3 of the method.

Here, the lane properties to be extracted are a color of the lane. However, alternatively or additionally, the lane properties to be extracted may be a contour, optionally including a size, a length and/or a width, coefficient of lane segments, start and end of lane segments, lane age, lane confidence, color confidence, lane mark type, lane range start, lateral and longitudinal distance, lane range end and availability of the lane.

### Reference signs list

- 1: data processing device
- 2: first feature extraction module
- 21 - 24: histogram calculating module
- 25: multi path first lane properties detection module
- 3: second feature extraction module
- 31 - 34: second lane properties detection module
- 35: multi path first lane properties detection module
- 4: validator

## Claims

1. Method for plausibilising extracted lane properties using sensor data captured by at least one sensor system installed at an automated vehicle, **characterized in that** the method comprises:
- extracting first lane properties from the captured sensor data using an algorithm being based on artificial intelligence,
- extracting second lane properties from the captured sensor data using a deterministic algorithm, and
- performing a plausibility check by comparing the extracted first and second lane properties to each other to plausibilise the extracted first and second lane properties.

2. Method according to claim 1, **characterized in that** the sensor system comprises a camera system with at least one camera, preferably multiple cameras, being installed at the automated vehicle such that the captured sensor data corresponds to an environment around the automated vehicle.

3. Method according to claim 2, **characterized in that** extracting the first lane properties using the algorithm being based on artificial intelligence includes:
- calculating multiple histograms, wherein the multiple histograms include at least one histogram for each one of the multiple cameras, and
- the first lane properties are extracted using each one of the calculated multiple histograms.

4. Method according to claim 3, **characterized in that** offline data is used for calculating the multiple histograms, the offline data may comprise statistical data, the statistical data may comprise at least one frame of camera data previously captured by one of the multiple cameras with, optionally manually labelled, first lane properties.

5. Method according to claim 3 or 4, **characterized in that** performing the plausibility check further includes comparing the calculated multiple histograms to each other to plausibilise the extracted first lane properties.

6. Method according to claim 5,
- wherein at least two of the multiple cameras of the camera system comprise overlapping fields of view,
**characterized in that:**
- performing the plausibility check further includes comparing the at least two calculated histograms of the at least two cameras in a region where the field of view of the at least two of the multiple cameras overlap each other to plausibilise the extracted first lane properties.

7. Method according to any of claims 1 to 6, **characterized in that** the method further includes detecting the lane using the captured sensor data and extracting the first and/or the second lane properties from at least one, preferably multiple, more preferably three to five, data sample(s) being located at or near a vicinity of a center of the detected lane.

8. Method according to claim 7, as far as dependent on claim 2, **characterized in that** extracting the second lane properties from the captured sensor data using the deterministic algorithm comprises:
- taking a first data sample located at the center of the detected lane,
- taking at least one second data sample located in the vicinity of the center of the detected lane such that the at least one second data sample at least partly overlaps with the first data sample, and
- extracting the second lane properties from the first and the at least one second data sample.

9. Method according to any of claims 1 to 8, **characterized in that** extracting the second lane properties from the captured sensor data using the deterministic algorithm is done for multiple frames of captured sensor data and/or multiple segments of the lane.

10. Method according to claim 9, **characterized in that** performing the plausibility check further includes comparing the second lane properties extracted from the multiple frames and/or multiple segments using the deterministic algorithm to each other to plausibilise the extracted second lane properties.

11. Method according to any of claims 2 to 10, **characterized in that** extracting the second lane properties from the captured sensor data using the deterministic algorithm is done for each one of the multiple cameras, respectively.

12. Method according to claim 11, **characterized in that** performing the plausibility check further includes comparing the second lane properties extracted from the captured sensor data of each one of the multiple cameras to each other to plausibilise the extracted second lane properties.

13. Method according to any of claims 1 to 12, **characterized in that** the first and or the second lane properties include a color, a contour, optionally including a size, a length and/or a width, coefficient of lane segments, start and end of lane segments, lane age, lane confidence, color confidence, lane mark type, lane range start, lateral and longitudinal distance, lane range end and availability of the lane.

14. Data processing device comprising means for carrying out the method according to any of claims 1 to 13.

15. A computer program product and/or computer-readable storage medium comprising instructions which, when executed by a computer, cause the computer to carry out the method according to any of claims 1 to 13.
